# EUROPÄISCHE PATENTSCHRIFT

(11) **EP 3 233 634 B1**
(45) Veröffentlichungstag und Bekanntmachung des Hinweises auf die Patenterteilung: **13.06.2018**
(21) Anmeldenummer: 15831127.4
(22) Anmeldetag: 04.12.2015
(51) Int. Cl.: B64D 3/02, B64C 3/16, F41J 9/10, B64C 1/00

(54) **AERODYNAMISCH GEFORMTER, AKTIVER SCHLEPPKÖRPER**
AERODYNAMICALLY SHAPED, ACTIVE TOWED BODY
CORPS REMORQUÉ ACTIF DE FORME AÉRODYNAMIQUE

(30) Priorität: 15.12.2014 DE 102014018857
(43) Veröffentlichungstag der Anmeldung: 25.10.2017
(73) Patentinhaber: Alfred-Wegener-Institut Helmholtz-Zentrum für Polar- und Meeresforschung, 27570 Bremerhaven (DE)
(72) Erfinder: HERBER, Andreas, 27472 Cuxhaven (DE); KALMBACH, Dirk, 27576 Bremerhaven (DE); GERDES, Rüdiger, 27612 Loxstedt (DE); BAYER, Hans-Jörg, 85139 Wettstetten (DE)
(86) Internationale Anmeldenummer: PCT/DE2015/000576
(87) Internationale Veröffentlichungsnummer: WO 2016/095886

(56) Entgegenhaltungen:
- DE-A1- 19 652 414
- DE-A1- 19 916 145
- DE-A1-102010 018 547
- DE-A1-102014 001 873
- DE-C- 424 378
- GB-A- 737 318
- US-A- 3 976 937
- US-A1- 2002 190 162
- US-A1- 2005 017 129
- US-B1- 6 765 383
- US-B2- 6 640 739
- Djamal Khelif ET AL: "Measurements of Air-Sea Fluxes with a Controlled Towed Vehicle (CTV) Controlled Towed Vehicle (CTV)", , 22. März 2010 (2010-03-22), XP055258807, Gefunden im Internet: URL:http://www.unols.org/sites/default/fil es/201002scoap_09.pdf [gefunden am 2016-03-16] in der Anmeldung erwähnt

## Beschreibung

Die Erfindung bezieht sich auf einen aerodynamisch geformten, aktiven Schleppkörper, der mittels eines Schleppseils von einem angetriebenen Fluggerät durch die Luft schleppbar ist, zumindest mit einem in seiner vertikalen und horizontalen Längsebene gewölbten Rumpf mit einer Aggregatkammer, in der zumindest eine Energieversorgung und eine Steuereinrichtung angeordnet sind, und einer Lastkammer sowie mit zwei im hinteren Teil des Rumpfs angeordneten Tragflächen und einer Heckflosse mit jeweils durch die Steuereinrichtung verstellbaren Rudern und mit einer Ankopplung für das Schleppseil.

Derartige Schleppkörper werden einerseits im militärischen Bereich eingesetzt, wo sie zu Übungszwecken als Ziele oder Ablenkungen vom Fluggerät eingesetzt werden. Andererseits werden Schleppkörper aber auch im zivilen Bereich zu unterschiedlichen Messzwecken eingesetzt. Grundsätzlich ist die Möglichkeit für berührungsfreie Fernerkundungen mit einem angetriebenen Fluggerät, in der Regel ein Flugzeug oder ein Hubschrauber, in der atmosphärischen Grenzschicht bis 300 m durch auftretende natürliche und künstliche Hindernisse stark begrenzt. Unter guten Sichtbedingungen (keine tiefen Wolken oder wolkenlos) können Messungen mit dem Flugzeug in 60 m, unter schlechten Sichtbedingungen (tiefe Wolken, Nebel, Regen etc.) nur bis maximal 300 m Höhe, also nur am Rand der atmosphärischen Grenzschicht, durchgeführt werden. Bereits unterhalb von 150 m bestehen hohe Sicherheitsauflagen für den Flugbetrieb. Oft sind aber Messungen unmittelbar über dem Untergrund, beispielsweise direkt über der Meereisoberfläche oder unterhalb einer Wolkendecke ohne direkten Sichtkontakt zum Fluggerät, von besonderem Interesse. Für solche Zwecke werden unbemannte Schleppkörper eingesetzt, die nicht über einen eigenen Antrieb verfügen (im Gegensatz zu Drohnen), sondern von dem Fluggerät, das dann in einer unkritischen Höhenzone oberhalb 300 m fliegt, durch die Luft geschleppt werden. Die generelle Flugrichtung des Schleppkörpers wird damit von dem Fluggerät bestimmt. Dabei ist der Schleppkörper über ein in der Länge variables Schleppseil mit dem Schleppkörper verbunden. Es ist zu unterscheiden zwischen passiven Schleppkörpern, die keine eigene Manövrierfähigkeit besitzen, und aktiven Schleppkörpern, die - im Rahmen der durch das Fluggerät vorgegebenen generellen Flugrichtung - eine eigene Manövrierfähigkeit im Raum aufweisen.

Schleppkörper zu Messzwecken werden beispielsweise in den Polargebieten eingesetzt, um Informationen über die Meereisoberfläche und -dickenverteilung zu erhalten. Aber auch atmosphärische Messungen können mit solchen Schleppkörpern durchgeführt werden (beispielweise Messungen des Gehalts an BC BlackCarbon, Aerosolmessungen (Partikelkonzentrationen, chemische Zusammensetzung) und atmosphärische Spurengasmessungen (CO, CO₂, SO₂, NO_{X}) zum Erhalt von Informationen über die meteorologischen Bedingungen und über die Beschaffenheit der Wolken, geophysikalische Prospektionen und Umweltüberwachungen (Emissionen von Schiffen und Kraftwerken sowie Landminendetektion) in zugänglichen Siedlungs- bzw. Industriegebieten, aber auch besonders unzugänglichen Gebieten (Polargebiete, Ozeane, Gebirge, Regenwälder, Wüsten)). Es kann in einer Höhe (Flughöhe Schleppkörper) oder auch synchron in zwei Höhen (Flughöhen Fluggerät und Schleppkörper) innerhalb oder simultan innerhalb und außerhalb der planetaren Grenzschicht gemessen werden. Mit einem manövrierbaren Schleppkörper können darüber hinaus noch vertikale Messprofile in unterschiedlichen Flughöhen bis dicht über dem Untergrund bei guten Sichtverhältnissen ermittelt werden, ohne dass die Schleppseillänge verändert werden muss.

### Stand der Technik

Ein aktiver Schleppkörper zu Messzwecken ist aus der **Präsentation** "Measurements of Air-Sea Fluxes with a Controlled Towed Vehicle (CTV)" von D. Khelif et al. bekannt. Die Präsentation wurde im Rahmen des Ocean Sciences Meetings des UNOLS Scientific Committee for Oceanographic Aircraft Research in der Town Hall Session in Portland, Oregon, USA, am 22.02.2010 veröffentlicht und ist im Internet abrufbar (Stand 19.11.2014) unter der URL http://www.unols.org/sites/default/files/201002scoap_09.pdf. Bei dem bekannten CTV handelt es sich um einen teilaktiven Schleppkörper zur berührungsfreien Ermittlung von Messdaten aus dem Luftraum. Der Schleppkörper verfügt über verschiedene Sensoren zur Ermittlung der Messdaten, beispielsweise meteorologische Sensoren (Druck- und Temperatursensor, Hygrometer und Windmesser sowie Sensorik für Spurengasmessungen) und zur Ermittlung seiner Position in der Luft, beispielsweise radargestützter Höhenmesser, GPS-System, Navigationssystem und Videokamera. Der Schleppkörpers besitzt zwei kurze Tragflächen, die um eine Radialachse drehbar sind und der Höhenänderung des Schleppkörpers im Flug dienen. Der bekannte Schleppkörper ist zylinderförmig und damit aerodynamisch ungünstig ausgebildet. Zur Flugstabilisierung weist der bekannte Schleppkörper deshalb mehrere starre Windleitflächen auf. Weiterhin verfügt der bekannte Schleppkörper über eine computergestützte Steuereinrichtung, die ein automatisches Flugkontrollsystem zur selbsttätigen Steuerung der vertikalen Flugposition (Flughöhe) des Schleppkörpers aufweist. Durch ausschließliche Veränderung der Flughöhe können Hindernisse gesteuert überflogen werden, wobei diese Steuerung aber durch einen Operator an Bord des schleppenden Fluggeräts vorgenommen werden muss. Ist ein manövrierter Überflug nicht möglich, wird der Schleppkörper eingeholt oder abgeworfen, was aber zu einer starken Gefährdung der Umwelt und in der Regel zur Zerstörung des Schleppkörpers führt.

Der der Erfindung nächstliegende Stand der Technik ist aus der GB 737 318 A bekannt. Es wird ein aktiver Schleppkörper als Luftziel für militärische Zwecke beschrieben, der über ein Schleppseil von einem Flugzeug durch die Luft geschleppt werden kann. Der Schleppkörper ist aerodynamisch ausgebildet und weist einen sowohl in der vertikalen als auch in der horizontalen Längsebene (in der die Längsachse x liegt) einen gewölbten Rumpf auf. Es ergibt sich ein torpedoartiger, rotationssymmetrischer Rumpf. Weiterhin weist der Schleppkörper zwei Tragflächen und an seinem Heck eine Heckflosse auf. Dabei sind die Tragflächen in ihrer Aufsicht deltaförmig ausgebildet und verlaufen in ihrem Querschnitt vollständig eben. Die Tragflächen sind in der Höhe mittig und rechtwinklig am Rumpf angeordnet (im Schleppbetrieb sind sie also im Geradeausflug horizontal ausgerichtet). In der Aufsicht sind die Tragflächen im hinteren Teil des Rumpfs angeordnet. Der bekannte Schleppkörper ist aktiv, d.h. manövrierfähig ausgebildet und kann in alle drei Raumrichtungen gelenkt werden. Dazu weisen die Tragflächen drehbare Tragflächenenden (entsprechend Querruder) auf, über die eine Kurvenneigung des Schleppkörpers erreicht werden kann. Weiterhin sind Höhenruder in die Tragflächen und ein Seitenruder in die Heckflosse integriert. Alle Ruder werden von einer Steuereinrichtung angesteuert, die in einer Aggregatkammer im Rumpf angeordnet ist. Die Steuereinrichtung wird manuell vom Flugzeug aus, ferngesteuert von einer Bodenstation aus oder per Autopilot vom Schleppkörper aus bedient, wobei der Autopilot der Lagestabilisierung des Schleppkörpers im Schleppbetrieb dient. Weiterhin befindet sich in der Aggregatkammer die Energieversorgung für den Schleppkörper in Form von Akkumulatoren. Die Aggregatkammer des bekannten Schleppkörpers ist aus Vollmaterial hergestellt und weist für die Steuereinrichtung und die Energieversorgung entsprechende Aussparungen auf. Der Rumpf umfasst noch eine Lastkammer, die vollständig von einem Fallschirm ausgefüllt ist. Das Schleppseil ist an einer Ankopplung an einer absprengbaren Buckelnase des Schleppkörpers befestigt. Durch Absprengen der Buckelnase kann der Schleppkörper vom Flugzeug abgekoppelt werden. Durch seine aerodynamische Form hat der Schleppkörper Gleiteigenschaften und kann mit Hilfe des Fallschirms gelandet werden.

Weiterhin gibt sind aus dem Stand der Technik abgeknickte Tragflächen für verschiedene Flugkörper bekannt. Dieses Prinzip des sogenannten "Knickflügels" (engl. gull wing) hat verschiedene Vorteile und verleiht einem Flugzeug besonders in Kurvenlage eine höhere Querstabilität. So ist es aus der DE 424 378 A und der DE 196 52 414 A1 bekannt, die Tragflächen zur Stabilisierung eines Flugzeug abzuknicken. Dabei sind die Tragflächen aber seitlich oder oberhalb des Rumpfs angeordnet und knicken zunächst nach oben ab. Der Verdrängungseffekt durch die seitlich daran nach oben abfließende Luft erhöht die Stabilität des Flugzeugs, zieht aber auch einen geringeren Auftrieb nach sich. Aus der US 2005/017129 A1**,** vergleiche Figur 14B, ist ein Schleppkörper bekannt, bei dem die Tragflächen unterhalb des Rumpfs mit kreisrundem Querschnitt angeordnet sind und zunächst schräg nach unten verlaufen, bevor sie dann schräg nach oben abknicken. Die abgeknickten Tragflächen sollen dabei aber vor allem einen Einfangtrichter für ein Einholkabel bilden, das in der Luft an den Schleppkörper angekoppelt werden soll, um diesen einzuholen.

Aus der US 6 640 739 B2 ist es bekannt, ein Gerät für Unterwasserfernerkundung, das zum Transport als Last unter ein Flugzeug gehängt ist, aerodynamisch so auszubilden, dass es nach dem Abkoppeln von dem Flugzeug abwärts gleitet, wobei es dabei von einem Fallschirm unterstützt wird, und unversehrt auf dem Wasser landet, um dann einzutauchen. Dabei weist das Erkundungsgerät aber eine einfache zylindrische Form und zwei an seiner Oberseite angesetzte gerade Tragflächen auf. Aus der US 2002/0190162 A1 ist ein Schleppkörper für messtechnische Aufgaben bekannt, der einen in seiner horizontalen und vertikalen Längsebene gewölbt verlaufenden Rumpf aufweist. Dabei ist der Schleppkörper aber passiv ausgebildet und verfügt über keine eigenständige Manövrierfähigkeit. Der aus der US 6 765 383 B1 bekannte Schleppkörper für Messaufgaben ist ebenfalls passiv und mit einem doppelt gewölbten Rumpf ausgebildet und verfügt über einen Nasenmast, in dem verschiedene Messinstrumente bzw. deren Sensoren angeordnet sind. Aus der DE 199 16 145 A1 ist es bekannt, die Tragflügel eines Flugzeugs zur Erhöhung des Auftriebs und zur Stabilisierung des Flugverhaltens jeweils aus mehreren Segmenten zusammenzusetzen. Dabei handelt es sich jedoch um nach unten offene Strömungskammern mit sich verengendem Querschnitt.

Die ältere Anmeldung DE 10 2014 001 873 A1 beschäftigt sich ebenfalls mit einem manövrierbaren, aktiven Schleppkörper für wissenschaftliche und kommerzielle Messzwecke und basiert auf dem oben beschriebenen CTV. Im Gegensatz dazu wird bei dem Schleppkörper der älteren Anmeldung eine volle Manövrierbarkeit im ganzen Raum erreicht. Das automatisierte eigenständige Umfliegen von detektierten Hindernissen stellt bei dem in der älteren Anmeldung beanspruchten Schleppkörper bereits einen relevanten Sicherheitsaspekt dar, der die Piloten des Fluggeräts bedeutsam entlastet. Dabei steht in der älteren Anmeldung jedoch nicht die aerodynamische Gestaltung des Schleppkörpers mit einer optimierten Lastaufnahme im Vordergrund, sondern die Möglichkeit, im Falle einer Störung oder Ausfallens der Steuerelektronik den Schleppkörper mittels eines elektromechanischen Fehlfunktionsmoduls zuverlässig in eine flugneutrale Position zu überführen, um ihn sicher durch das Fluggerät bergen zu können. Die vorliegende Anmeldung bezieht sich auf andere Aspekte als die ältere Anmeldung, übernimmt aber bezüglich der anderen, allgemeinen Sachverhalte ausdrücklich deren Offenbarungsumfang.

### Aufgabenstellung

Ausgehend von dem nächstliegenden Stand der Technik in Form des eingangs beschriebenen aktiven Schleppkörpers gemäß der GB 737 318 A ist die Aufgabe für die vorliegende Erfindung darin zu sehen, diesen gattungsgemäßen Schleppkörper so weiterzubilden, dass er für wissenschaftliche und kommerzielle Messzwecke einsetzbar und mit einer großen und variablen Last, insbesondere in Form von Messinstrumenten mit zugehöriger Sensorik, einfach beladbar ist. Dabei soll er aber seine volle Manövrierfähigkeit im Raum und seine aerodynamischen Eigenschaften beibehalten und sogar noch verbessern. Weiterhin soll auch der erfindungsgemäße Schleppkörper trotz seiner Last im Geradeausflug gleitfähig und im abgekoppelten Zustand sicher landbar sein. Die erfindungsgemäße Lösung für diese Aufgabe ist dem Anspruch 1 zu entnehmen. Vorteilhafte Weiterbildungen der Erfindung werden in den Unteransprüchen aufgezeigt und im Folgenden im Zusammenhang mit der Erfindung näher erläutert.

Der erfindungsgemäße Schleppkörper ist erfindungsgemäß dadurch gekennzeichnet, dass der Rumpf in seiner Querebene dreieckig ausgebildet ist, wobei zwei obere Ecken auf der Oberseite des Rumpfs und eine untere Ecke auf der Unterseite des Rumpfs liegen und wobei der Rumpf in seiner vertikalen Längsebene nur auf der Oberseite gewölbt und auf der Unterseite gerade verläuft, und jede der beiden Tragflächen in ein kleines und ein großes Segment unterteilt ist, wobei das kleine Segment nach unten zeigend im Bereich der unteren Ecke am Rumpf und das große Segment nach oben zeigend an das kleine Segment anschließt und wobei jedes kleine Segment eine weitere Lastkammer aufweist.

Der Rumpf des erfindungsgemäßen Schleppkörpers ist in spezieller Weise aerodynamisch geformt. In seiner horizontalen Längsebene ist er symmetrisch gewölbt. In seiner vertikalen Längsebene ist er aber nur auf seiner Oberseite gewölbt, wohingegen seine Unterseite ungewölbt verläuft. Es ergibt sich eine besonders auftriebsgünstige und strömungstechnisch optimierte Form, die aber gleichzeitig einen komfortablen Innenraum zur Unterbringung von Lasten zur Verfügung stellt. Weiterhin ist bei der dreieckigen Form der Querebene des Rumpfs des Schleppkörpers die Oberseite des Rumpfs breitflächig und die Unterseite des Rumpfs schmalflächig ausgebildet. Die Lasten können sowohl von oben als auch von der Seite gut in den Rumpf eingebracht werden. In die eingebrachten Lasten im Rumpf kann von oben gut eingesehen werden. Durch die dreieckige Querschnittsform des Rumpfs ergibt sich außerdem eine gute Selbsthaltung der eingebrachten Last, da die Last selbstzentrierend auf den tiefsten Punkt des Rumpfs ausgerichtet ist. Ein Verrutschen während des Schleppbetriebes ist ausgeschlossen.

Die Tragflächen des erfindungsgemäßen Schleppkörpers greifen seitlich im unteren Bereich des Rumpfs, also in seinem schmalen Bereich an seiner Unterseite, an. Dadurch wird die Tragflächenlänge gegenüber einer seitlich in der Mitte an einem ausgebauchten Rumpf angreifenden Tragfläche verlängert, ohne die Spannweite zwischen den Flügelspitzen zu vergrößern. Dadurch werden wiederum die Flugeigenschaften des Schleppkörpers verbessert, ohne seine Handhabbarkeit zu verschlechtern. Jede Tragfläche ist in zwei Abschnitte unterteilt und besteht aus einem kleinen und einem großen Segment. Die kleinen Segmente sind nach unten zeigend, also abwärts ausgerichtet. In dem unter ihnen und unterhalb des Rumpfs liegenden Raum bildet sich im Flug ein Luftpolster aus, das den Schleppkörper trägt und stabilisiert. Die sich an die kleinen Segmente anschließenden großen Segmente der Tragflächen sind nach oben zeigend, also aufwärts gerichtet, sodass die Luft daran nach oben fließen kann. Durch den sich ergebenden Verdrängungseffekt wird die Stabilität des Schleppkörpers weiter erhöht. Dabei ist mit "nach unten zeigend" (abwärts gerichtet) der Bereich unterhalb des Schleppkörpers und mit "nach oben zeigend" (aufwärts gerichtet) der Bereich oberhalb des Schleppkörpers gemeint, wenn dieser sich in seiner aktiven Ausrichtung im Schleppbetrieb befindet. Die Anstellwinkel der kleinen und großen Segmente sind unterschiedlich, insbesondere können die kleinen Segmente flacher nach unten zeigen als die großen Segmente nach oben zeigen. Die kleinen Segmente der Tragflächen sind dicker ausgeführt als die großen Segmente, die schlank und spitz zulaufend ausgeführt sind. Durch die dickere Ausführung der kleinen Segmente wird in den Tragflächen Raum für weitere Last in Form von weiteren Lastkammern geschaffen. Dadurch wird die gesamte Nutzlast des Schleppkörpers, die sich jetzt aus der Nutzlast in der Lastkammer im Rumpf und der Nutzlast in den weiteren Lastkammern in den kleinen Segmenten der Tragflächen zusammensetzt, noch erhöht.

Bevorzugt und vorteilhaft ist bei dem Schleppkörper nach der Erfindung vorgesehen, dass in jeder Tragfläche ein Ruder für die Lagesteuerung um die Längsachse (x-Achse) und die Querachse (Y-Achse) des Schleppkörpers und in der Heckflosse ein Ruder für die Lagesteuerung um die Hochachse (z-Achse) des Schleppkörpers angeordnet ist. Die Ruder sind als Tragflächenklappen in die Tragflächen integriert. Verschwenkungen in der dritten Raumachse (z-Achse) werden bei dem beanspruchten Schleppkörper über das Ruder in der Heckflosse erreicht. Insgesamt ergibt sich ein V-förmiges Leitwerk mit nur zwei Rudern. Der Schleppkörper nach der Erfindung ist im Raum voll manövrierfähig und kann insbesondere Hindernissen selbsttätig oder ferngesteuert ausweichen. Dafür ist es vorteilhaft und bevorzugt, wenn die Steuerungseinrichtung eine Autopilotsteuerungseinrichtung und eine manuelle Steuerungseinrichtung umfasst, wobei die Autopilotsteuerungseinrichtung auch ein lagestabilisierendes Kreiselsystem und ein Antikollisionsmodul umfasst. Durch die Autopilotsteuerungseinrichtung kann der beanspruchte Schleppkörper eigenständig Hindernissen ausweichen. Das ist besonders dann von großem Vorteil, wenn die Operatoren im schleppenden Fluggerät keinen direkten Sichtkontakt zum Schleppkörper haben, beispielsweise wenn das Fluggerät oberhalb und der Schleppkörper unterhalb der Wolkendecke fliegen oder wenn die Distanz zwischen Fluggerät und Schleppkörper sehr groß ist. Für das eigenständige Ausweichen des Schleppkörpers wird ein Antikollisionsmodul eingesetzt, das über vorausschauende Messsensoren Hindernisse erfasst und deren Daten an die Autopilotsteuerungseinrichtung weitergibt, die diese Daten in entsprechende Steuerbefehle an die Ruder umsetzt. Dadurch ist ein optimales Ausweichen des Schleppkörpers gegenüber Hindernissen durch kombinierte Änderungen seiner vertikalen und lateralen Fluglage sicher gewährleistet. Dies ermöglicht vor allem ein sehr niedriges Überfliegen des Untergrunds im Bereich von Hindernissen (5m - 10m über der Oberfläche). Durch die präzise Positionierbarkeit des Schleppkörpers relativ zum Untergrund kann er auch in Flughöhen mit speziellen Windregimen, bei tiefen Wolken und bei komplexem Terrain eingesetzt werden, in denen ansonsten starke Auflagen bestehen oder Operationen eines Schleppkörpers bislang überhaupt nicht möglich sind.

Für die Ermittlung von Messdaten ist es wichtig, den Flug des Schleppkörpers zu stabilisieren, um exakte Aussagen über die jeweilige Fluglage des Schleppkörpers in Relation zu den Messdaten machen oder um Messungen durchführen zu können, die einen konstanten Abstand zwischen dem Schleppkörper und dem Fluggerät benötigen (beispielsweise Fern-Infrarot-Spektroskopie). Der beanspruchte Schleppkörper verfügt deshalb über ein Kreiselsystem (Gyrometersystem), mit dessen Daten die Autopilotsteuerungseinrichtung über die Ansteuerung der Ruder den Schleppkörper in seiner Fluglage ständig stabilisiert. Durch das Kreiselsystem, welches zur Sicherheitserhöhung redundant ausgebildet sein kann, werden Pendelbewegungen des Schleppkörpers beim Schleppen, aber auch beim Hieven und Fieren sofort kompensiert. Der Schleppkörper bleibt beim Geradeausflug in einer stabilen Fluglage und schlingert nicht. Dabei kann das Kreiselsystem aber auch manuell übersteuert werden. Der Anteil zwischen automatischer und manueller Steuerung ist einstellbar. Der Schleppkörper kann über die manuelle Steuerungseinrichtung manövriert werden, beispielsweise, um exakte Höhenänderungen des Schleppkörpers zur Messung von Höhenprofilen oder eine exakte Positionierung des Schleppkörpers in Relation zu einem Objekt, beispielsweise der Abgaswolke eines Fracht- oder Kreuzfahrtschiffes, herbeizuführen. Die Kommunikation zwischen Fluggerät und Schleppkörper erfolgt bevorzugt über eine drahtlose Funkverbindung. Beim manuellen Manövrieren kann das Personal an Bord des Fluggeräts beispielswiese mit einer Shutterbrille und einem vorausschauenden Videosystem (First Person View) ausgestattet sein. Durch die Shutterbrille kann ein Operator den Blick aus seinem Fluggerät und aus dem oder auf den Schleppkörper abwechselnd oder gleichzeitig wahrnehmen und dann entsprechend mit dem Piloten zur Steuerung von Fluggerät und Schleppkörper kommunizieren.

Der Schleppkörper nach der Erfindung ist nicht für militärische Zwecke gedacht und hat sein Hauptanwendungsgebiet auf dem Gebiet der Messtechnik. Dabei manövriert er am Schleppseil und/oder ferngelenkt vom Flugzeug oder ferngelenkt vom Boden aus oder eigenständig. Messdaten sowohl für die spätere Auswertung als auch für den aktuellen Flugbetrieb werden benötigt. Dafür muss der beanspruchte Schleppkörper relativ große Lasten in Form von Messinstrumenten unterschiedlichster Art aufnehmen können. Für eine Kommerzialisierung ist es darüber hinaus besonders wichtig, dass die Lasten in einfacher Weise auf- und entnehmbar sind. Bevorzugt und vorteilhaft es deshalb, wenn die Tragflächen und die Aggregatkammer im hinteren Bereich des Schleppkörpers und die Lastkammer im mittleren und vorderen Bereich des Schleppkörpers angeordnet sind. Die Aggregatkammer nimmt diejenigen Lasten auf, die dauerhaft an Bord des Schleppkörpers sind und zu dessen Manövrierung und Versorgung sowie zur Versorgung der Messinstrumente dienen. Diese Lasten müssen zwar auch gewartet werden, verbleiben aber grundsätzlich bei jedem Einsatz im Schleppkörper. Deshalb können sie an einer weniger zugänglichen Stelle des Schleppkörpers angeordnet sein. Der Zugriff auf die veränderlichen Nutzlasten sollte dagegen weitgehend ungehindert und besonders einfach sein. Deshalb befindet sich bei dem beanspruchten Schleppkörper die Lastkammer im mittleren und vorderen Teil des Rumpfs, der besser zugänglich ist. Die weiteren Lastkammern in den kleinen Segmenten der Tragflächen sind ebenfalls leicht zugänglich.

Diese günstige Verteilung von Last- und Aggregatraum macht den Schleppkörper nach der Erfindung besonders anwenderfreundlich. Die Anwenderfreundlichkeit wird noch verbessert, wenn bevorzugt und vorteilhaft die Lastkammer im Rumpf einzeln entnehmbare Segmentkammern aufweist, die mit variablen Nutzlasten beladbar sind. Die Segmentkammern können von den Nutzern vorbestückt und dann einfach in den Schleppkörper ein- und ausgebaut werden. Ein modulares System mit unterschiedlich messtechnisch bestückten Segmentkammern, die je nach Bedarf ausgewählt und kombiniert werden, ist umsetzbar. Die Segmentkammern können einfach quaderförmig ausgebildet sein. Sie können aber in ihrer Außenkontur auch dem dreieckigen Rumpf angepasst sein, wodurch sich eine sichere Festlegung und eine optimale Platzausnutzung im Rumpf ergeben. Dabei ist es besonders vorteilhaft und bevorzugt, wenn die oberen Ecken und die untere Ecke des Rumpfs abgerundet sind. Es ergibt sich eine kontinuierliche Dreiecksform in der Querebene, die nach außen besonders aerodynamisch und nach innen besonders lastfreundlich ist. Tote Räume durch spitze Ecken werden dadurch vermieden. Außerdem werden störende Turbulenzwirbel an der Außenhaut des Rumpfs vermieden.

Bevorzugt und vorteilhaft ist es im Sinne einer optimalen Platzausnutzung des Schleppkörpers weiterhin, wenn die Ankopplung für das Schleppseil in der Mitte des Rumpfs angeordnet ist und an der Spitze des Rumpfs ein Nasenmast angeordnet ist, in dem zumindest ein Messinstrument und/oder eine Sende-und Empfangseinrichtung, die der drahtlosen Verbindung zu dem angetriebenen Fluggerät und/oder zu einer boden- oder wassergestützten Empfangs-und Sendestation dient, untergebracht sind. Durch die mittige Ankopplung wird die Manövrierfähigkeit des Schleppkörpers - gegenüber einem an der Nase geschleppten Schleppkörper - noch weiter erhöht. Gleichzeitig ist die Nase des Schleppkörpers frei für die An- und Unterbringung von weiteren Messinstrumenten. Der der Nasenspitze vorgelagerte Nasenmast ragt unverdeckt und frei in den Raum hinein und lässt sich daher gut für umherschauende Beobachtungen und Messungen sowie für einen Funkverkehr und Datentransfer nutzen. Der bei dem beanspruchten Schleppkörper bereits vorne im Rumpf liegende Lastraum wird damit noch über die Nase des Schleppkörpers hinaus erweitert. Die Sende-Empfangseinrichtungen sind für eine direkte Messdatenübermittlung an verschiedene Stationen, aber auch für eine Fernlenkung des Schleppkörpers von verschiedenen Stationen aus nutzbar. Die Nutzung der Übertragungskanäle kann in beiden Richtungen erfolgen (bidrektional).

Ein besonderer Vorteil des beanspruchten Schleppkörpers ist in seiner großen Lastaufnahmekapazität und vorteilhaften Lastanordnung und -segmentierung zu sehen, die aber aufgrund der speziellen Ausbildung des Rumpfs und der Tragflächen trotzdem nicht seine besonders guten aerodynamischen Flugeigenschaften, insbesondere Gleitflugeigenschaften, mindert. Aufgrund des Hauptanwendungsgebietes, des Einsatzes von Messtechnik in allen Variationen, ist es vorteilhaft und bevorzugt, wenn in der Lastkammer im Rumpf und in den weiteren Lastkammern in den kleinen Segmenten jeder Tragfläche verschiedene Messinstrumente angeordnet sind. Die große Lastkammer im Rumpf eignet sich besonders für schwerere Messinstrumente, die nicht unbedingt die vorausschauende Flugrichtung des Schleppkörpers benötigen, wie es beispielsweise bei bildgebenden Erfassungseinrichtungen der Fall ist. Die weiteren Lastkammern in den kleinen Segmenten der Tragflächen haben eine vorausschauende Lage. Sie sind deshalb besonders geeignet zur Aufnahme von vorausschauenden Messinstrumenten, die für eine Hinderniserkennung erforderlich sind, oder solchen Messinstrumenten, die Messungen in der Luftströmung während des Schleppens durchführen. In den weiteren Lastkammern der kleinen Segmente können daher besonders vorteilhaft Gas- und/oder Aerosoleinlassdüsen für Messinstrumente angeordnet sein, beispielsweise zur Durchführung von Spurengas- oder Partikelmessungen.

Weiter oben wurde bereits ausgeführt, dass mit dem beanspruchten Schleppkörper Messwerte sowohl für eine aktuelle oder spätere Auswertung für wissenschaftliche oder kommerzielle Zwecke als auch für das aktuelle Manövrieren im Schleppbetrieb erfasst werden. Deshalb ist es bevorzugt und vorteilhaft, wenn einige der Messinstrumente dem Manövrieren und Stabilisieren des Schleppkörpers, insbesondere der Hinderniserkennung im Schleppbetrieb, und einige der Messinstrumente der Gewinnung von Messdaten für forschungsorientierte und/oder kommerzielle Zwecke dienen. Bevorzugt und vorteilhaft ist es dabei, wenn die Messinstrumente zumindest ein vorwärtsschauendes Infrarotkamerasystem, ein Videokamerasystem, ein lasergestütztes Entfernungsmesssystem (zur Sicherstellung von Mindestabständen des Schleppkörpers sowohl nach vorne als auch nach unten), ein radargestütztes Höhenmesssystem, ein satellitengestütztes Ortungssystem und/oder ein Messsystem für meteorologische Parameter, wie Temperatur, Feuchte und Wind umfassen. Diese Systeme gewährleisten die zuverlässige Positionsbestimmung des Schleppkörpers unter allen Witterungsbedingungen. Einen weiteren Sicherheitsaspekt stellt eine schwenkbare Videokamera im Fluggerät dar. Diese kann insbesondere den Schleppkörper beobachten und auf einem für den Piloten im Fluggerät gut einsehbaren Display anzeigen. Zusammen mit dem FPV-kann der Schleppkörper in externer Ansicht und interner Aussicht vom Fluggerät oder auch von anderen Stationen aus überwacht werden.

Der Aggregatraum des beanspruchten Schleppkörpers nimmt vor allem solche Steuereinrichtungen auf, die für den Schleppbetrieb erforderlich sind, wohingegen der Lastraum vor allem Messinstrumente für Forschung- und Untersuchungszwecke vorbehalten ist. Die Energieversorgung für die verschiedenen Messinstrumente und Steuereinrichtungen an Bord umfasst bevorzugt Akkumulatoren und einen Generator zum Aufladen der Akkumulatoren während des Schleppbetriebes. Die Akkumulatoren, bei denen es sich vorteilhaft um leistungsfähige und langlebige Lithium-Polymer-Akkumulatoren handeln kann, sind bevorzugt im Aggregatraum angeordnet. Der Generator kann bevorzugt und vorteilhaft als bürstenloser Generator ausgebildet sein, dessen Außenläufer in Form eines ausklappbaren Propellers ausgebildet und am Heck des Rumpfs angeordnet ist, wobei der Propeller im Schleppbetrieb von der Luftströmung angetrieben wird. Der Generator ist daher vorteilhaft am Rumpfende angeordnet, in dem sich bei dem beanspruchten Schleppkörper auch der Aggregatraum befindet.

Schließlich ist es noch vorteilhaft und bevorzugt, wenn im Rumpf des Schleppkörpers ein Rettungsfallschirmsystem angeordnet ist. Im Falle des Abkoppelns des Schleppkörpers vom schleppenden Fluggerät wird ein Rettungsfallschirm aktiviert, der eine automatische oder manuelle Rettung unterstützt. Dadurch kann eine sichere Landung des an sich ja bereits besonders gut gleitfähigen Schleppkörpers gewährleistet und die Gefährdung von Personen auf dem Boden minimiert werden. Verletzungen von Personen und Beschädigungen, insbesondere auch der empfindlichen Messlast, oder sogar der Verlust des gesamten Schleppkörpers können so verhindert werden. Ein Abkoppeln des Schleppkörpers vom Fluggerät erfolgt in der Regel nur in einem Notfall, wenn beispielsweise ein Umfliegen eines plötzlich auftauchenden Hindernisses nicht mehr möglich ist oder notwendige Funktionen im Schleppkörper oder die gesamte Energieversorgung ausgefallen sind. Das Rettungsfallschirmsystem kann sowohl in der Aggregatkammer am hinteren Ende des Rumpfs als auch in der Lastkammer im vorderen oder mittleren Teil des Rumpfs oder in der weiteren Lastkammer in den kleinen Segmenten der Tragflächen des Schleppkörpers angeordnet sein. Es verfügt dann über einen entsprechend positioniert Auswurföffnung.

Der Schleppkörper nach der Erfindung kann zutreffend mit dem Akronym "MANTAS" von "Maneuverable Active New Towed Atmospheric System" bezeichnet werden und verfügt über zumindest folgende Eigenschaften:
- Das Schleppseil kann bis 4000 m lang sein.
- Die Spannungsversorgung erfolgt über Lithium Polymer Akkumulatoren.
- Der bürstenlose Generator zum Aufladen der Akkumulatoren ist über einen klappbaren Propeller als Außenläufer am Heck des Rumpfs antreibbar, ein Lademodus während des Schleppbetriebs ist möglich.
- Die Steuerung des MANTAS um seine Längs- und Querachse (x, y) erfolgt über Tragflächenklappen, die Steuerung um die Hochachse (z) erfolgt über ein Seitenruder in der Heckflosse.
- Das Manövrieren erfolgt über Servomotoren, die durch ein separates Kreiselsystem ansteuerbar sind. Ein eigenstabiler Geradeausflug des Schleppkörpers ist garantiert.
- Der MANTAS kann auch aus dem schleppenden Fluggerät heraus manövriert werden, beispielsweise durch FPC (First Person View) mit Kamerasystem (Shutterbrille).
- Der MANTAS verfügt über ein aktives Flugkontrollsystem und implementierte Sensorik für eine volle Manövrierfähigkeit und Hinderniserkennung mit Ausweichfunktion (FLIR Wärmebildkamera, Video, Laser Range Finder).
- Es wird ein Rettungsfallschirmsystem eingesetzt, das bei einer Fehlfunktion des Schleppkörpers seine Rettung ermöglicht, wenn der Schleppkörper vom Fluggerät abgekoppelt werden muss.
- Der MANTAS kann durch seinen segmentierten Lastraum eine variable Payload einschließlich einem kompletten meteorologischen Sensorpackage aufnehmen.

Aus diesen Eigenschaften ergibt sich eine Reihe von besonderen Vorteilen des MANTAS:
- Durch die besondere aerodynamische Ausführung von Rumpf und Tragflächen erzeugt der MANTAS einen starken eigenen Auftrieb und ist gleitfähig.
- Der MANTAS hat einen eigenstabilen Geradeausflug auf vorgegebenen Höhen, unbeeinflusst von äußeren Störungseinflüssen.
- Der MANTAS kann sichere Operationen an der Oberfläche (10 m über Grund) durchführen.
- Der MANTAS ermöglicht Messungen bei schlechten Sichtverhältnissen (Nebel, tiefe Wolken).
- Der MANTAS ermöglicht exakte Parallelmessungen zum Fluggerät in zwei Höhen und aufgrund des stabilisierten konstanten Abstands zwischen MANTAS und Fluggerät auch in der Luftsäule zwischen Fluggerät und MANTAS (Küvettenmessung).
- Der MANTAS kann als aktiver Schleppkörper durch aktive Positionierung kleinskalige Gebiete dreidimensional abscannen.
- Der MANTAS operiert mit Hinderniserkennung und automatischer Ausweichfunktion, die nur durch die Schleppseillänge begrenzt ist. Die eigene Manövrierfähigkeit vermeidet Kollisionen und ermöglicht Datenaufnahmen über schwierigem Terrain.
- Der MANTAS hat eine hohe Lastkapazität und verteilt Aggregate, Messinstrumente und andere Lasten in optimaler Weise über Rumpf und Tragflächen. Eine anwenderfreundliche Lastsegmentierung ist möglich.

Als mögliche Anwendungsgebiete für den MANTAS sind beispielsweise zu nennen:
- Schiffsemissionsmessungen (Short-Lived Climate Forcing Pollutants) und Messungen von anderen Emissionen, z.B. Methan
- Turbulenzmessungen in der planetaren Grenzschicht in Bezug auf die Wechselwirkung zwischen Ozean, Meereis und Atmosphäre
- Profilmessungen von Spurengasen, Aerosolen, Kohlenwasserstoffen
- simultane Messungen innerhalb und außerhalb der Grenzschicht
- Messungen in Regionen, die nicht oder nur schwer zugänglich sind, z.B. über Meereis, in Küstenbereichen sowie Untersuchungen von orographischen bzw. vulkanische Wolken
- kommerzielle Anwendungen, wie Messung der Abgaswolken von Industrieunfällen, Messung der Strahlung von Nuklearunfällen, Landminendetektion, Such- und Rettungsaktivitäten in komplexem Terrain, Detektion lokaler Verschmutzung des Meeres, Exploration von Öl und Gaslagerstätten.

### Ausführungsbeispiele

Der Schleppkörper nach der Erfindung und seine vorteilhaften Modifikationen werden anhand der schematischen, nicht maßstäblichen Figuren zum besseren Verständnis nachfolgend noch weitergehend erläutert. Im Einzelnen zeigt die
- **Figur 1**: den Schleppkörper in der perspektivischen Gesamtansicht,
- **Figur 2**: den Schleppkörper in der Vorderansicht,
- **Figur 3**: den Schleppkörper in der Seitenansicht und
- **Figur 4**: den Schleppkörper in der Draufsicht und
- **Figur 5**: eine Nutzlastsegmentierung im Schleppkörper.

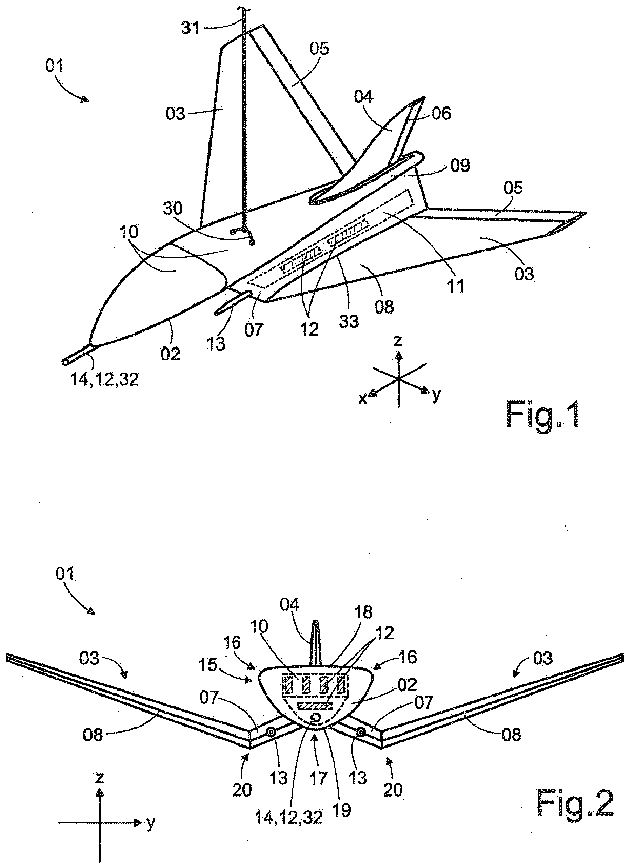

In der **Figur 1** ist in der perspektivischen Gesamtansicht ein Schleppkörper **01** nach der Erfindung in aktiver und aerodynamisch geformter Ausbildung dargestellt (kartesisches Koordinatensystem x: Längsachse, y: Querachse, z: Hochachse). Der Schleppkörper **01** weist einen Rumpf **02,** zwei in der Aufsicht deltaförmige Tragflächen **03** und eine Heckflosse **04** auf. Der Rumpf **02** kann aus einem Kunststoff, beispielsweise kohlefaserverstärkt, aber auch aus einem Leichtmetallwerkstoff bestehen. Dargestellt ist jeweils ein Ruder **05** in den Tragflächen **03** für die Lagesteuerung um die Längsachse x und die Querachse y des Schleppkörpers **01** und ein Ruder **06** in der Heckflosse **04** für die Lagesteuerung um die Hochachse z des Schleppkörpers **01.** Die Tragflächen **03** sind jeweils aufgeteilt in ein kleines Segment **07** und ein großes Segment **08.** Das kleine Segment **07** und das große Segment **08** sind unter einem Winkel zueinander angeordnet, es ergibt sich eine Knicklinie **33,** weitere Ausführungen sind der Beschreibung der **Figur 2** zu entnehmen. Weiterhin sind eine Aggregatkammer **09** im hinteren Bereich des Rumpfs **02** und eine Lastkammer **10** im mittleren und vorderen Bereich des Rumpfs **02** vorhanden.

Des Weiteren befindet sich eine weitere Lastkammer **11** in den kleinen Segmenten **07** der Tragflächen **03.** In der weiteren Lastkammer **11** sind verschiedene Messinstrumente **12** angeordnet. Spurengas- und/oder Aerosoleinlassdüsen **13** (jeweils links und rechts vom Rumpf), die zu den Messinstrumenten **12** für Spurengas bzw. Aerosoimessungen führen, sind links und rechts an der Vorderseite des kleinen Segments **07** dargestellt. Weiterhin weist der Schleppkörper **01** einen Nasenmast **14** auf, in dem sich ebenfalls Messinstrumente **12** und/oder Sende- und Empfangseinrichtungen **32** befinden. Zu erkennen ist in der **Figur 1** auch eine mittig angeordnete lösbare Ankopplung **30** für ein Schleppseil **31**.

In der **Figur 2** ist der Schleppkörper **01** in der Vorderansicht dargestellt. In dieser Ansicht ist die dreieckige Querebene **15** (y-z-Ebene) des Rumpfs **02** mit ihren beiden oberen Ecken **16** und ihrer unteren Ecke **17** zu erkennen. Dargestellt sind abgerundete Ecken **16, 17.** Zwischen den beiden oberen Ecken **16** ist eine breite Oberseite **18** des Rumpfs **02** gebildet. Im Bereich der unteren Ecke **17** ist eine zulaufende Unterseite **19** ausgebildet. Im Bereich der unteren Ecke **17** sind die beiden kleinen Segmente **07** der Tragflächen **03** nach unten zeigend angeordnet. An die kleinen Segmente **07** schließen sich die großen Segmente **08** der Tragflächen **03** nach oben zeigend an. Es ergibt sich in jeder Tragfläche **03** ein aerodynamisch günstiger Knick **20.** Dabei sind die kleinen Segmente 07 und die großen Segmente **08** mit unterschiedlichen Winkeln angeordnet. Die kleinen Segmente **07** zeigen flacher nach unten als die großen Segmente **08** nach oben ansteigen. Dargestellt sind noch die Spurengas- und/oder Aerosoleinlassdüsen **13,** der Nasenmast **14** und die Heckflosse **04.** Angedeutet ist auch der Lastraum **10,** im gezeigten Ausführungsbeispiel rechteckig ausgeführt und an die Querebene **15** des Rumpfs **02** angepasst. Der Lastraum **10** ist mit Messinstrumenten **12** beladen.

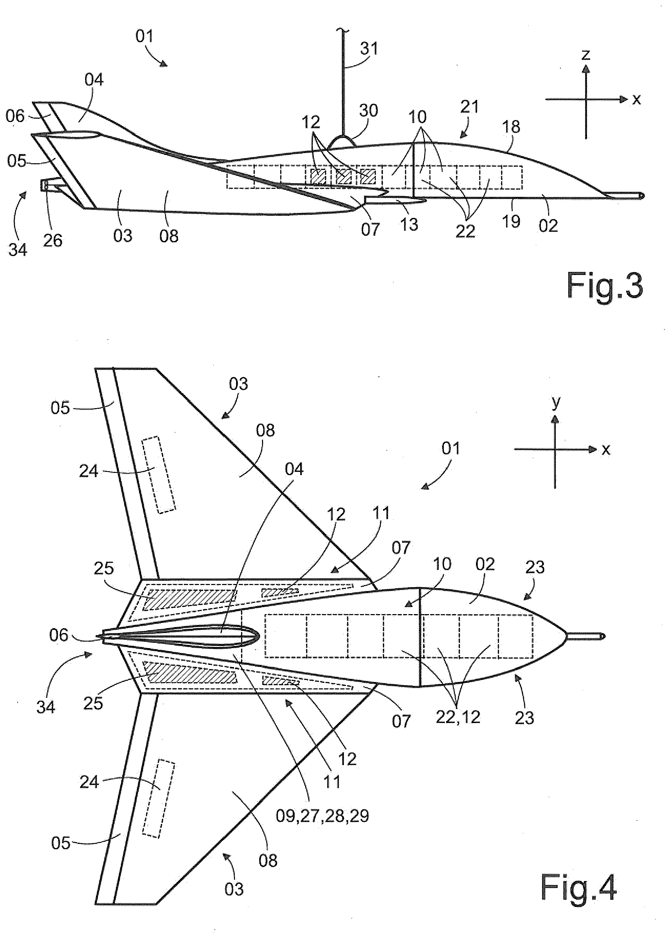

Die **Figur 3** zeigt den Schleppkörper **01** in der Seitenansicht (nicht erwähnte Bezugszeichen sind den vorangehenden Figuren zu entnehmen). Zu erkennen ist in der vertikalen Längsebene (x-z-Ebene) eine Wölbung **21** der Oberseite **18** des Rumpfs **02**, wohingegen die Unterseite **19** des Rumpfs **02** ungewölbt und eben verläuft. Des Weiteren sind ein kleines Segment **07** und ein großes Segment 08 mit dem Ruder **05** einer Tragfläche **03** dargestellt. Weiterhin ist die Heckflosse **04** mit dem Ruder **06** zu erkennen. Der Lastraum **10** im vorderen und mittleren Bereich des Rumpfs **02**, der Nasenmast **14** und eine Spurengas- oder Aerosoleinlassdüse **13** sind angedeutet. Im gezeigten Ausführungsbeispiel ist der Lastraum **10** rechteckig ausgeführt und in einzelne Segmentkammern **22** unterteilt. In den einzelnen Segmentkammern **22** befinden sich verschiedene Messinstrumente **12.** Im Heck **34** des Rumpfs **02** kann ein klappbarer Propeller **26** angeordnet sein, der einen Generator zum Aufladen der Akkumulatoren antreibt.

Die **Figur 4** zeigt in den Schleppkörper **01** in der Draufsicht. Dargestellt ist eine symmetrische Wölbung **23** in der horizontalen Längsebene (x-y-Ebene) des Rumpfs **02.** Gut zu erkennen ist der spitze Zulauf des Rumpfs **02** zu seinem Heck **34** hin. Beide konstruktiven Maßnahmen unterstützen die Aerodynamik des Schleppkörpers **01**. In der Draufsicht ist die Ausgestaltung der kleinen Segmente **07** und der großen Segmente **08** der Tragflächen **03** ebenfalls gut zu erkennen. In den großen Segmenten **08** sind Servoantriebe **24** für die Ruder **05** angedeutet. Zu erkennen sind die Heckflosse **04** mit dem Ruder **06** und die Segmentierung in der Lastkammer **10** sowie die Aggregatkammer **09.** Die kleinen Segmente **07** umfassen die weiteren Lastkammern **11.** In der Draufsicht ist gut zu erkennen, wie die weiteren Lastkammern **11** die Lastkammer **10** ergänzen. Im vorderen Bereich der Lastkammer **10** sind im gezeigten Ausführungsbeispiel Messinstrumente **12** angeordnet. Dabei dienen einige der Messinstrumente der Navigation des Schleppkörpers **01** und einige Messinstrumente der Aufnahme von Messdaten für wissenschaftliche oder kommerzielle Zwecke. Im vorderen Bereich der weiteren Lastkammer **11** sind weitere Messinstrumente **12** angeordnet. Im hinteren Bereich der weiteren Lastkammer **11** ist im gezeigten Ausführungsbeispiel ein Rettungsfallschirmsystem **25** angeordnet. Im Aggregatraum **09** dazwischen befinden sich verschiedene Aggregate **27**, die für die Steuerung und Energieversorgung des Schleppkörpers **01** zuständig sind, beispielsweise eine Steuerungseinrichtung **28** mit einer Autopilotsteuerungseinrichtung mit lagestabilisierendem Kreiselsystem und einem Antikollisionsmodul sowie mit einer manuellen Steuerungseinrichtung sowie eine Energieversorgung **29** mit aufladbaren Akkumulatoren einschließlich einem Generator, der über den ausklappbaren Propeller **26** am Heck des Schleppkörpers **01** angetrieben wird.

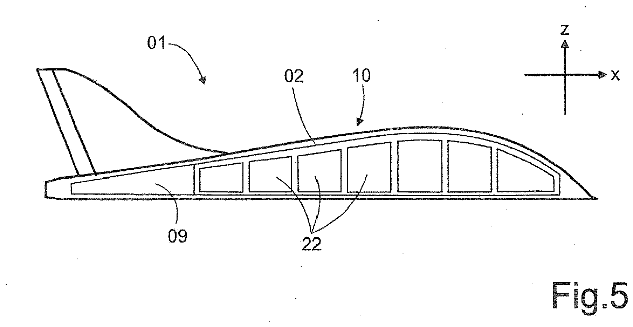

Die **Figur** 5 zeigt den Schleppkörper **01** noch einmal schematisch im Längsschnitt (x-z-Ebene). Zu erkennen ist der Lastraum **10,** der der Kontur des Rumpfs **02** angepasst ist. Dabei ist der Lastraum **10** in einzelne Segmentkammern **22** unterteilt, die einzeln ein- und ausbaubar und be- und entladbar sind. An den Lastraum **10** schließt sich der Aggregatraum **09** an.

Der Schleppkörper **01** nach der Erfindung kann beispielsweise folgende technische Maße aufweisen:

| | |
|---|---|
| Rumpflänge | 3000 mm |
| Flügelspannweite | 2800 mm |
| maximale Höhe des Rumpfs | 289 mm |
| maximale Breite des Rumpfs | 446 mm |
| Gesamtgewicht | 150 kg |
| Lastkapazität Messinstrumente | 90 kg |
| Lastraumvolumen | 90 dm³ |
| Maximale Länge des Schleppseils | 4000 m |

### Bezugszeichenliste

- **01**: Schleppkörper
- **02**: Rumpf
- **03**: Tragfläche
- **04**: Heckflosse
- **05**: Ruder Lagesteuerung Längsachse, Querachse von 01
- **06**: Ruder Lagesteuerung Hochachse von 01
- **07**: kleines Segment von 03
- **08**: großes Segment von 03
- **09**: Aggregatkammer
- **10**: Lastkammer
- **11**: weitere Lastkammer
- **12**: Messinstrument
- **13**: Spurengas- und/oder Aerosoleinlassdüse
- **14**: Nasenmast
- **15**: dreieckige Querebene von 02
- **16**: obere Ecke von 15
- **17**: untere Ecke von 15
- **18**: Oberseite von 02
- **19**: Unterseite von 02
- **20**: Knick in 03
- **21**: Wölbung von 18, vertikale Ebene
- **22**: Segmentkammer
- **23**: Wölbung von 18, horizontale Ebene
- **24**: Servoantrieb für 05
- **25**: Rettungsfallschirmsystem
- **26**: Propeller an 34
- **27**: Aggregat
- **28**: Steuerungseinrichtung (mit Autopilotsteuerungseinrichtung mit Kreiselsystem und Antikollisionsmodul und manueller Steuerungseinrichtung)
- **29**: Energieversorung (mit Akkumulatoren und Generator)
- **30**: lösbare Ankopplung von 31
- **31**: Schleppseil
- **32**: Sende- und Empfangseinrichtung
- **33**: Knicklinie zwischen 07, 08
- **34**: Heck von 02

## Patentansprüche

1. Aerodynamisch geformter, aktiver Schleppkörper (01), der mittels eines Schleppseils (29) von einem angetriebenen Fluggerät durch die Luft schleppbar ist, zumindest mit einem in seiner vertikalen und horizontalen Längsebene gewölbten Rumpf (02) mit einer Aggregatkammer (09), in der zumindest eine Energieversorgung (29) und eine Steuereinrichtung (28) angeordnet sind, und einer Lastkammer (10) sowie mit zwei im hinteren Teil des Rumpfs (02) angeordneten Tragflächen (03) und einer Heckflosse (04) mit jeweils durch die Steuereinrichtung (28) verstellbaren Rudern (05, 06) und mit einer Ankopplung (30) für das Schleppseil (31),
**dadurch gekennzeichnet, dass**
der Rumpf (02) in seiner Querebene (15) dreieckig ausgebildet ist, wobei zwei obere Ecken (16) auf der Oberseite (18) des Rumpfs (02) und eine untere Ecke (17) auf der Unterseite (19) des Rumpfs (02) liegen und wobei der Rumpf (02) in seiner vertikalen Längsebene nur auf der Oberseite (18) gewölbt und auf der Unterseite (19) gerade verläuft, und jede der beiden Tragflächen (03) in ein kleines und ein großes Segment (07, 08) unterteilt ist, wobei das kleine Segment (07) nach unten zeigend im Bereich der unteren Ecke (17) am Rumpf (02) und das große (08) Segment nach oben zeigend an das kleine Segment (07) anschließt und wobei jedes kleine Segment (07) eine weitere Lastkammer (11) aufweist.

2. Schleppkörper (01) nach Anspruch 1,
**dadurch gekennzeichnet, dass**
in jeder Tragfläche (03) ein Ruder (05) für die Lagesteuerung um die Längsachse (x) und die Querachse (y) des Schleppkörpers (01) und in der Heckflosse (04) ein Ruder (06) für die Lagesteuerung um die Hochachse (z) des Schleppkörpers (01) angeordnet ist.

3. Schleppkörper (01) nach Anspruch 1 oder 2,
**dadurch gekennzeichnet, dass**
die Steuerungseinrichtung (28) eine Autopilotsteuerungseinrichtung und eine manuelle Steuerungseinrichtung umfasst, wobei die Autopilotsteuerungseinrichtung auch ein lagestabilisierendes Kreiselsystem und ein Antikollisionsmodul umfasst.

4. Schleppkörper (01) nach einem der vorangehenden Ansprüche,
**dadurch gekennzeichnet, dass**
die Tragflächen (03) und die Aggregatkammer (09) im hinteren Bereich des Schleppkörpers (01) und die Lastkammer (10) im mittleren und vorderen Bereich des Schleppkörpers (01) angeordnet sind.

5. Schleppkörper (01) nach einem der vorangehenden Ansprüche,
**dadurch gekennzeichnet, dass**
die Lastkammer (10) im Rumpf (02) einzeln entnehmbare Segmentkammern (22) aufweist, die mit variablen Nutzlasten beladbar sind.

6. Schleppkörper (01) nach einem der vorangehenden Ansprüche,
**dadurch gekennzeichnet, dass**
die oberen Ecken (16) und die untere Ecke (17) des Rumpfs (02) abgerundet sind.

7. Schleppkörper (01) nach einem der vorangehenden Ansprüche,
**dadurch gekennzeichnet, dass**
die Ankopplung (30) für das Schleppseil (31) in der Mitte des Rumpfs (02) angeordnet ist und dass an der Spitze des Rumpfs (02) ein Nasenmast (14) angeordnet ist, in dem zumindest ein Messinstrument (12) und/oder eine Sende- und Empfangseinrichtung (32), die der drahtlosen Verbindung zu dem angetriebenen Fluggerät und/oder zu einer boden- oder wassergestützten Empfangs- und Sendestation dient, angeordnet sind.

8. Schleppkörper (01) nach einem der vorangehenden Ansprüche,
**dadurch gekennzeichnet, dass**
in der Lastkammer (10) im Rumpf (02) und in der weiteren Lastkammer (11) im kleinen Segment (07) jeder Tragfläche (03) verschiedene Messinstrumente (12) und/oder Sende- und Empfangseinrichtungen (32) angeordnet sind.

9. Schleppkörper (01) nach Anspruch 7 oder 8,
**dadurch gekennzeichnet, dass**
einige der Messinstrumente (12) dem Manövrieren, der Hinderniserkennung im Schleppbetrieb und dem Stabilisieren des Schleppkörpers und einige der Messinstrumente (12) der Gewinnung von Messdaten für forschungsorientierte und/oder kommerzielle Zwecke dienen.

10. Schleppkörper (01) nach Anspruch 8 und 9,
**dadurch gekennzeichnet, dass**
in den weiteren Lastkammern (11) der kleinen Segmente (07) Spurengas- und/oder Aerosoleinlassdüsen (13) für Messinstrumente (12) angeordnet sind.

11. Schleppkörper (01) nach einem der vorangehenden Ansprüche 7 bis 10,
**dadurch gekennzeichnet, dass**
die Messinstrumente (12) zumindest ein vorwärtsschauendes Infrarotkamerasystem, ein Videokamerasystem, ein lasergestütztes Entfernungsmesssystem, ein radargestütztes Höhenmesssystem, ein satellitengestütztes Ortungssystem und/oder ein meteorologisches Messsystem umfassen.

12. Schleppkörper (01) nach einem der vorangehenden Ansprüche,
**dadurch gekennzeichnet, dass**
die Energieversorgung (27) zumindest Akkumulatoren und einen Generator umfasst.

13. Schleppkörper nach Anspruch 12,
**dadurch gekennzeichnet, dass**
der Generator als bürstenloser Generator ausgebildet ist, dessen Außenläufer in Form eines ausklappbaren Propellers (26) ausgebildet und am Heck (34) des Rumpfs (02) angeordnet ist, wobei der Propeller (26) im Schleppbetrieb von der Luftströmung angetrieben wird.

14. Schleppkörper (01) nach Anspruch 12 oder 13,
**dadurch gekennzeichnet, dass**
die Akkumulatoren als Lithium-Polymer-Akkumulatoren ausgebildet sind.

15. Schleppkörper (01) nach einem der vorangehenden Ansprüche,
**dadurch gekennzeichnet, dass**
im Rumpf ein Rettungsfallschirmsystem (25) angeordnet ist.

## Claims

1. Aerodynamically shaped, active towed element (01) which can be towed through the air by a powered aerial device by means of towing cable (29), with a fuselage (02) at least convex it its vertical and horizontal longitudinal plane with an equipment chamber (09), in which at least one energy supply (29) and a control device (28) are arranged, and load chamber (10), as well as with two wings (03) arranged in the rear part of the fuselage (02) and a tail fin (04) with rudders (05, 06) adjustable by the control device (28) and with a coupling (30) for the towing cable (31)
**characterised in that**
the fuselage (02) is triangular in its cross-section (15), wherein two upper corners (16) are located on the upper side (18) of the fuselage (02) and one lower corner (17) is on the underside (19) of the fuselage (02) and wherein the fuselage (02) in its vertical longitudinal plane is only convex on the upper side (18) and is straight on the underside (19) and each of the two wings (03) is divided into a small and a large segment (07, 08), wherein the small segment (07) pointing downwards adjoins the fuselage (02) in the area of the lower corner (17) and the large (08) segment, pointing upwards, adjoins the small segment (07) and wherein each small segment (07) comprises a further load chamber (11).

2. Towed element (01) according to claim 1
**characterised in that**
arranged in each wing (03) is a rudder (05) for positional steering about the longitudinal axis (x) and the transverse axis (y) of the towed body (01) and in the tail fil (04) there is a rudder (06) for positional steering about the vertical axis (z) of the towed element (01).

3. Towed element (01) according to claim 1 or 2
**characterised in that**
the control device (28) comprises an autopilot control device and a manual control device, wherein the autopilot control device also comprises a position-stabilising gyroscope system and an anti-collision module.

4. Towed element (01) according to any one of the preceding claims
**characterised in that**
the wings (03) and the equipment chamber (09) are arranged in the rear area of the towed element (01) and the load chamber (10) is arranged in the middle and forward area of the towed element (01).

5. Towed element (01) according to any one of the preceding claims
**characterised in that**
in the fuselage (02) the load chamber (10) comprises individually removable segment chambers (22) which can be loaded with variable payloads.

6. Towed element (01) according to any one of the preceding claims
**characterised in that**
the upper corners (16) and the lower corner (17) of the fuselage (02) are rounded.

7. Towed element (01) according to any one of the preceding claims
**characterised in that**
the coupling (30) for the towing cable (31) is arranged in the middle of the fuselage (02) and that at the tip of the fuselage (02) a nose mast (14) is arranged in which at least one measuring instrument (12) and/or a transmitting and receiving device (32) is arranged which ensures wireless connection to the powered aerial device and/or a ground or water- supported transmission and receiving station.

8. Towed element (01) according to any one of the preceding claims
**characterised in that**
in the load chamber (10) in the fuselage (02) an in the further load chamber (11) in the small segment (07) of each wing (03) various measuring instruments (12) and/or transmitting and receiving devices (32) are arranged.

9. Towed element (01) according to claim 7 or 8
**characterised in that**
some of the measuring instruments (12) are used for manoeuvring, obstacle recognition in the towing area and stabilising of the towed element and some of the measuring instruments (12) are used for obtaining measuring data for research-oriented and/or commercial purposes.

10. Towed element (01) according to claim 8 and 9
**characterised in that**
arranged in the further load chambers (11) of the small segments (07) are trace gas and/or aerosol inlet nozzles (13) for measuring instruments (12).

11. Towed element (01) according to any one of the preceding claims 7 to 10
**characterised in that**
the measuring instruments (12) at least include a forward-looking infrared camera system, a video camera system, a laser-supported distances measuring system, a radar-supported altitude measuring system, a satellite-supported positioning system and/or a meteorological measuring system.

12. Towed element (01) according to any one of the preceding claims
**characterised in that**
the energy supply (27) at least comprises storage batteries and a generator.

13. Towed element according to claim 12
**characterised in that**
the generator is a brushless generator, the outer rotor of which in in the form of a fold-out propeller (26) and is arranged on the tail (34) of the fuselage (02), wherein the propeller (26) is driven by the airflow during towing.

14. Towed element (01) according to claim 12 or 13
**characterised in that**
the storage batteries are in the form of lithium-polymer storage batteries.

15. Towed element (01) according to any one of the preceding claims
**characterised in that**
a rescue parachute system (25) is arranged in the fuselage.

## Revendications

1. Corps remorqué (01) actif, de conformation aérodynamique, qui à l'aide d'un câble de remorquage (29) peut être remorqué dans l'air par un aéronef motorisé, avec au moins un fuselage (02) bombé dans son plan longitudinal vertical et horizontal, avec un compartiment groupe (09), dans lequel sont placés au moins une alimentation d'énergie (29) et un système de commande (28) et une chambre de charge (10), ainsi qu'avec deux surfaces porteuses (03) et une dérive (04) placées dans la partie arrière du fuselage (02) dotées chacune de gouvernails (05, 06) réglables par le système de commande (28) et d'un accouplement (30) pour le câble de remorquage (31),
**caractérisé en ce que**
dans son plan transversal (15) le fuselage (02) est conçu de forme triangulaire, deux angles supérieures (16) se situant sur le côté supérieur (18) du fuselage (02) et un angle inférieur (17) se situant sur le côté inférieur (19) du fuselage (02) et dans son plan longitudinal vertical, le fuselage (02) n'étant bombé que sur le côté supérieur (18) et s'étendant en ligne droite sur le côté inférieur (19), et chacune des deux surfaces porteuses (03) étant divisée en un petit et un grand segments (07, 08), le petit segment (07) étant dirigé vers le bas dans la région de l'angle inférieur (17) sur le fuselage (02) et le grand segment (08) dirigé vers le haut se raccordant sur le petit segment (07) et chaque petit segment (07) comportant une chambre de charge supplémentaire (11).

2. Corps remorqué (01) selon la revendication 1, **caractérisé en ce que** dans chaque surface porteuse (03) est placé un gouvernail (05) pour la commande de la position autour de l'axe longitudinal (x) et de l'axe vertical (y) du corps remoqué (01) et dans la dérive (04) est placé un gouvernail (06) pour la commande de la position autour de l'axe vertical (z) du corps remorqué (01).

3. Corps remorqué (01) selon la revendication 1 ou 2, **caractérisé en ce que** le système de commande (28) comporte un système de commande par pilote automatique et un système de commande manuel, le système de commande par pilote automatique comportant également un gyroscope stabilisateur de position et un module anticollision.

4. Corps remorqué (01) selon l'une quelconque des revendications précédentes, **caractérisé en ce que** les surfaces porteuses (03) et le compartiment groupe (09) sont placés dans la région arrière du corps remorqué (01) et la chambre de charge (10) est placée dans la région médiane et avant du corps remorqué (01).

5. Corps remorqué (01) selon l'une quelconque des revendications précédentes, **caractérisé en ce que** la chambre de charge (10) dans le fuselage (02) comporte des chambres de segment (22) individuellement amovibles, susceptibles d'être chargées avec des charges utiles variables.

6. Corps remorqué (01) selon l'une quelconque des revendications précédentes, **caractérisé en ce que** les angles supérieurs (16) et l'angle inférieur (17) du fuselage (02) sont arrondis.

7. Corps remorqué (01) selon l'une quelconque des revendications précédentes, **caractérisé en ce que** l'accouplement (30) pour le câble de remorquage (31) est placé au centre du fuselage (02) et **en ce que** sur la pointe du fuselage (02) est placé un mât avant (14) dans lequel sont placés au moins un instrument de mesure (12) et/ou un système émetteur et récepteur (32), servant à la communication sans fil avec l'aéronef motorisé et/ou avec une station réceptrice et émettrice terrestre ou navale

8. Corps remorqué (01) selon l'une quelconque des revendications précédentes, **caractérisé en ce que** dans la chambre de charge (10) dans le fuselage (02) et dans la chambre de charge (11) supplémentaire dans le petit segment (07) de chaque surface porteuse (03) sont placés différents instruments de mesure et/ou systèmes émetteurs et récepteurs (32).

9. Corps remorqué (01) selon la revendication 7 ou 8, **caractérisé en ce que** certains des instruments de mesure (12) servent à manoeuvrer, à identifier des obstacles et à stabiliser le corps remorqué et certains des instruments de mesure (12) servent à acquérir des données de mesure à des fins de recherche et/ou à des fins commerciales.

10. Corps remorqué (01) selon la revendication 8 et 9, **caractérisé en ce que** dans les chambres de charge (11) supplémentaires des petits segments (07) sont placées des buses pour gaz traceur et/ou des buses d'admission d'aérosol (13) pour des instruments de mesure (12).

11. Corps remorqué (01) selon l'une quelconque des revendications précédentes 7 à 10, **caractérisé en ce que** les instruments de mesure (12) comprennent au moins un système de caméra à infrarouge à balayage avant, un système de caméra vidéo, un système de mesure de la distance assisté par laser, un système de mesure de la hauteur assisté par radar, un système de localisation assisté par satellite et/ou un système de mesure météorologique.

12. Corps remorqué (01) selon l'une quelconque des revendications précédentes, **caractérisé en ce que** l'alimentation d'énergie (27) comprend au moins des accumulateurs et un générateur.

13. Corps remorqué selon la revendication 12, **caractérisé en ce que** le générateur est conçu sous la forme d'un générateur sans balai, dont l'induit extérieur est conçu sous la forme d'une hélice (26) déployable et est placé à l'arrière (34) du fuselage (02), en mode remorquage, l'hélice (26) étant entraînée par la circulation d'air.

14. Corps remorqué (01) selon la revendication 12 ou 13, **caractérisé en ce que** les accumulateurs sont conçus sous la forme d'accumulateurs lithium-polymère.

15. Corps remorqué (01) selon l'une quelconque des revendications précédentes, **caractérisé en ce que** dans le fuselage est placé un système de parachute de sauvetage (25).
